# EUROPEAN PATENT APPLICATION

(11) **EP 4 773 089 A1**
(43) Date of publication of application: **08.07.2026**
(21) Application number: 24911628.6
(22) Date of filing: 30.12.2024
(51) Int. Cl.: G06V 10/22

(54) **TRANSPORT DEVICE DISPATCHING METHOD AND APPARATUS, COMPUTER DEVICE, AND STORAGE MEDIUM**

(30) Priority: 30.12.2023 CN 202311865555; 30.12.2023 CN 202311872311
(71) Applicant: SF Technology Co., Ltd., Shenzhen, Guangdong 518000 (CN)
(72) Inventor: YANG, Xiaoping, Shenzhen, Guangdong 518000 (CN); MA, Jiajiong, Shenzhen, Guangdong 518000 (CN)
(74) Representative: Studio Torta S.p.A.
(86) International application number: PCT/CN2024/143858
(87) International publication number: WO 2025/140715

(57) **Abstract**

The present application relates to a transport device dispatching method and apparatus, a computer device, a storage medium, and a computer program product, which can be used in the technical field of computers. The method comprises: acquiring an image to be recognized (101), said image comprising an object to be recognized, and an identification code being set on said object; recognizing the identification code in said image to obtain identification code information of said object (102); determining the current position of said object on the basis of the identification code information (103); recognizing the current position and a target position of said object to obtain a position recognition result of said object (104), the position recognition result being used for indicating whether said object is located in the target position; and dispatching a transport device on the basis of the position recognition result (105), the transport device being used for transporting said object.

## Description

### RELATED APPLICATIONS

The present application claims priority to Chinese patent application No. 2023118655558 filed on December 30, 2023, entitled "Position Recognition Method and Apparatus, Computer Device, and Storage Medium" and to Chinese patent application No. 2023118723112 filed on December 30, 2023, entitled "Position Recognition Method and Apparatus, Computer Device, and Storage Medium", which are hereby incorporated by reference in their entireties.

### FIELD

The present application relates to the field of computers, and in particular to a method and apparatus for transport equipment scheduling, a computer device, a storage medium, and a computer program product.

### BACKGROUND

With the development of intelligent technologies, position recognition has important applications in many fields. By recognizing positions of objects, their exact spatial positions may be determined, which is crucial for resource optimization, route planning, inventory management, etc. Therefore, how to efficiently perform position recognition has become an important research direction.

In the related art, position recognition is performed by typically relying on manual visual observation. However, this method requires significant manual processing time, resulting in low efficiency. Since position recognition is crucial for the scheduling of transport equipment, low efficiency consequently leads to low scheduling efficiency of the transport equipment.

### BRIEF SUMMARY

According to various embodiments provided in the present application, a method and apparatus for transport equipment scheduling, a computer device, a computer-readable storage medium, and a computer program product are provided.

The present application provides a method for transport equipment scheduling, performed by a terminal. The method includes:
acquiring an image to be recognized, where the image to be recognized includes an object to be recognized, and the object to be recognized is provided with an identification code;
recognizing the identification code in the image to be recognized to obtain identification code information of the object to be recognized;
determining a current position of the object to be recognized based on the identification code information;
recognizing the current position and a target position of the object to be recognized to obtain a position recognition result of the object to be recognized, where the position recognition result is used to indicate whether the object to be recognized is located within the target position; and
scheduling a transport equipment based on the position recognition result, where the transport equipment is configured for transporting the object to be recognized.

In an embodiment, determining the current position of the object to be recognized based on the identification code information includes:
determining coordinate information of the identification code based on the identification code information; and
determining the current position of the object to be recognized based on the coordinate information of the identification code.

In an embodiment, determining the current position of the object to be recognized based on the coordinate information of the identification code includes:
fitting a position boundary of the object to be recognized based on the coordinate information of the identification code to obtain a fitted position boundary of the object to be recognized; and
recognizing the fitted position boundary as the current position of the object to be recognized.

In an embodiment, recognizing the current position and a target position of the object to be recognized to obtain the position recognition result of the object to be recognized includes:
determining a vertex position of the object to be recognized based on the fitted position boundary; and
recognizing the vertex position of the object to be recognized and the target position to obtain the position recognition result.

In an embodiment, recognizing the vertex position of the object to be recognized and the target position to obtain the position recognition result includes:
determining that the object to be recognized is located within the target position in a case that all vertex positions of the object to be recognized are located within the target position; or
determining that the object to be recognized is not located within the target position in a case that not all vertex positions of the object to be recognized are located within the target position.

In an embodiment, recognizing the current position and the target position of the object to be recognized to obtain the position recognition result of the object to be recognized includes:
extracting a region image corresponding to the object to be recognized from the image to be recognized in a case that there is an overlap between the current position and the target position of the object to be recognized;
recognizing a vertex position of the object to be recognized in the region image using a vertex position recognition model to obtain the vertex position of the object to be recognized; and
recognizing the vertex position and the target position to obtain the position recognition result of the object to be recognized.

In an embodiment, recognizing the vertex position and the target position to obtain the position recognition result of the object to be recognized includes:
recognizing the vertex position and the target position to obtain a vertex position recognition result of the object to be recognized, where the vertex position recognition result is used to indicate whether vertexes of the object to be recognized are located within the target position;
determining a current number of vertexes located within the target position based on the vertex position recognition result; and
determining that the position recognition result of the object to be recognized indicates that the object to be recognized is located within the target position in a case that the current number is greater than or equal to a preset number.

In an embodiment, extracting the region image corresponding to the object to be recognized from the image to be recognized in the case that there is the overlap between the current position and the target position of the object to be recognized includes:
extracting the region image from the image to be recognized in a case that there is an overlap between the current position and a candidate position of the object to be recognized; and
determining the candidate position that overlaps with the current position as the target position.

In an embodiment, the method further includes:
recognizing a candidate region from the image to be recognized; and
determining a position of the candidate region as the candidate position of the object to be recognized.

In an embodiment, scheduling the transport equipment based on the position recognition result includes:
acquiring a first historical position recognition result corresponding to a first recognized image, where the first recognized image is an image captured within a first preset time period before the image to be recognized is captured;
acquiring a second historical position recognition result corresponding to a second recognized image in a case that the first historical position recognition result is consistent with the position recognition result, where the second recognized image is an image captured within a second preset time period before the image to be recognized is captured;
determining an object state recognition result corresponding to the target position based on the position recognition result, the first historical position recognition result, and the second historical position recognition result, where the object state recognition result is used to indicate whether the object to be recognized is present within the target position;
generating a transport instruction corresponding to the object to be recognized in a case that the object state recognition result indicates that the object to be recognized is present within the target position; and
sending the transport instruction to the transport equipment, where the transport equipment is configured for transporting the object to be recognized from the target position to a transport position of the object to be recognized.

In an embodiment, scheduling the transport equipment based on the position recognition result includes:
acquiring historical position recognition results corresponding to a recognized image in a case that the position recognition result indicates that the object to be recognized is located within the target position, where the recognized image is an image of the object to be recognized captured within a preset time period before the image to be recognized is captured;
determining that the object to be recognized is successfully located within the target position in a case that all the historical position recognition results corresponding to the recognized image indicate that the object to be recognized is located within the target position;
determining an identity of the object to be recognized based on the identification code information of the object to be recognized;
determining a transport position of the object to be recognized based on the identity of the object to be recognized; and
sending the transport position to a transport equipment, where the transport equipment is configured for transporting the object to be recognized to the transport position.

The present application further provides an apparatus for transport equipment scheduling. The apparatus includes:
an image acquiring module, configured for acquiring an image to be recognized, where the image to be recognized includes an object to be recognized, and the object to be recognized is provided with an identification code;
an image recognizing module, configured for recognizing the identification code in the image to be recognized to obtain identification code information of the object to be recognized;
a position determining module, configured for determining a current position of the object to be recognized based on the identification code information;
an object recognizing module, configured for recognizing the current position and a target position of the object to be recognized to obtain a position recognition result of the object to be recognized, where the position recognition result is used to indicate whether the object to be recognized is located within the target position; and
an equipment scheduling module, configured for scheduling a transport equipment based on the position recognition result, where the transport equipment is configured for transporting the object to be recognized.

The present application further provides a computer device. The computer device includes a memory and one or more processors, where the memory is configured for storing a computer-readable instruction, and the one or more processors are configured for performing, when executing the computer-readable instruction, the following steps of:
acquiring an image to be recognized, where the image to be recognized includes an object to be recognized, and the object to be recognized is provided with an identification code;
recognizing the identification code in the image to be recognized to obtain identification code information of the object to be recognized;
determining a current position of the object to be recognized based on the identification code information;
recognizing the current position and a target position of the object to be recognized to obtain a position recognition result of the object to be recognized, where the position recognition result is used to indicate whether the object to be recognized is located within the target position; and
scheduling a transport equipment based on the position recognition result, where the transport equipment is configured for transporting the object to be recognized.

The present application further provides one or more computer-readable storage media. The computer-readable storage media store a computer-readable instruction thereon, which, when executed by one or more processors, causes the one or more processors to perform the following steps of:
acquiring an image to be recognized, where the image to be recognized includes an object to be recognized, and the object to be recognized is provided with an identification code;
recognizing the identification code in the image to be recognized to obtain identification code information of the object to be recognized;
determining a current position of the object to be recognized based on the identification code information;
recognizing the current position and a target position of the object to be recognized to obtain a position recognition result of the object to be recognized, where the position recognition result is used to indicate whether the object to be recognized is located within the target position; and
scheduling a transport equipment based on the position recognition result, where the transport equipment is configured for transporting the object to be recognized.

The present application further provides a computer program product. The computer-program product includes a computer-readable instruction, which, when executed by one or more processors, causes the one or more processors to perform the following steps of:
acquiring an image to be recognized, where the image to be recognized includes an object to be recognized, and the object to be recognized is provided with an identification code;
recognizing the identification code in the image to be recognized to obtain identification code information of the object to be recognized;
determining a current position of the object to be recognized based on the identification code information;
recognizing the current position and a target position of the object to be recognized to obtain a position recognition result of the object to be recognized, where the position recognition result is used to indicate whether the object to be recognized is located within the target position; and
scheduling a transport equipment based on the position recognition result, where the transport equipment is configured for transporting the object to be recognized.

Details of one or more embodiments of the present application are set forth in the following drawings and description. Other features, objectives, and advantages of the present application will become apparent from the description, drawings, and claims.

### BRIEF DESCRIPTION OF THE DRAWINGS

To more clearly illustrate solutions in the embodiments of the present application, the drawings that need to be used in the descriptions of the embodiments will be briefly described below. The drawings in the following description are only certain embodiments of the present application, and for those skilled in the related art, other drawings may be obtained based on these drawings without any creative work.
FIG. 1 is a schematic flowchart of a method for transport equipment scheduling according to an embodiment;
FIG. 2 is a schematic flowchart of steps for determining the current position according to an embodiment;
FIG. 3 is a schematic flowchart of steps for determining the current position according to another embodiment;
FIG. 4 is a schematic flowchart of steps for determining a position recognition result according to an embodiment;
FIG. 5 is a schematic flowchart of steps for determining a position recognition result according to an embodiment;
FIG. 6 is a schematic flowchart of steps for determining a target position according to an embodiment;
FIG. 7 is a schematic flowchart of steps for determining a candidate position according to an embodiment;
FIG. 8 is a schematic diagram of an image to be recognized in an embodiment;
FIG. 9 is a structural block diagram of an apparatus for transport equipment scheduling according to an embodiment; and
FIG. 10 is an internal structural diagram of a computer device according to an embodiment.

### DETAILED DESCRIPTION

The solutions in the embodiments of the present application are clearly and completely described below in conjunction with the accompanying drawings in the embodiments of the present application. These described embodiments are only a part of the embodiments of the present application, and not all of the embodiments. All other embodiments obtained by those skilled in the art based on the embodiments of the present application without any creative work belong to the protection scope of the present application.

To make the objectives, solutions, and advantages of the present application clearer, the present application is further described below in detail in conjunction with the accompanying drawings and specific embodiments. It should be understood the specific embodiments described herein are only used to explain the present application, and are not used to limit the present application.

It should be noted that user information (including but not limited to user device information, user personal information, etc.) and data (including but not limited to data used for analysis, stored data, displayed data, etc.) involved in the present application are all information and data authorized by the user or fully authorized by all parties, and collecting, using, and processing of related data must comply with relevant regulations.

A transfer station currently uses cage trolleys for cargo transfer. However, due to the weight of the cage trolleys, transfer efficiency of the cage trolleys within the transfer station is not high. Therefore, automated guided vehicles (AGVs) may be introduced for transferring the cage trolleys within the station. Tasks are assigned through a task management system within the station, and then the AGVs transport the designated cage trolleys from a specified start point to a specified destination, thus completing these tasks. The task assignment process for the AGVs may be manual or automatic. The present application provides a system for transferring a cage trolley by automatically calling AGVs, cores of which include: 1. a cage trolley ID (identification number) recognition method based on one-dimensional code scanning; 2. a cage trolley in-place recognition method based on one-dimensional code scanning results on the top of a cage trolley; 3. an AGV calling method based on a state machine; and 4. a cage trolley recognition method.

On this basis, the present application provides a method and apparatus for transport equipment scheduling, a computer device, a storage medium, and a computer program product. The method for transport equipment scheduling provided in the present application is described.

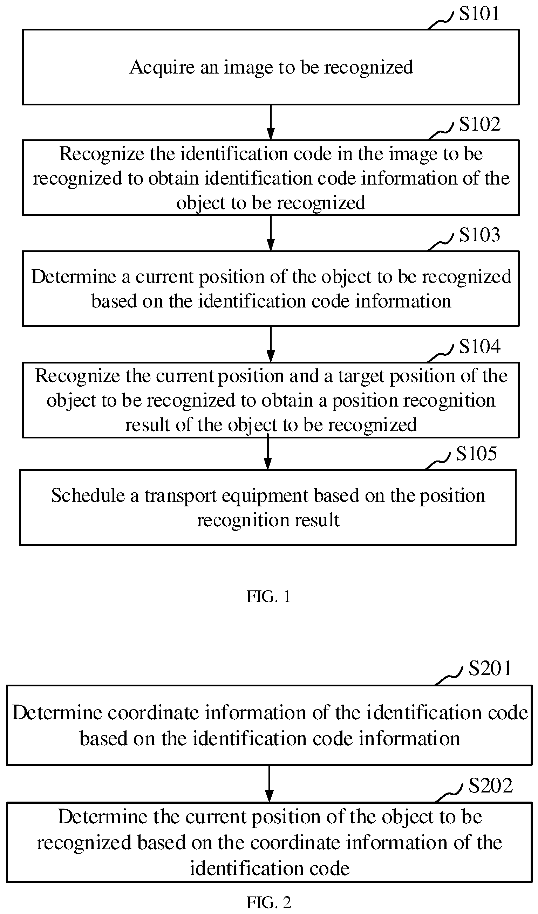

In an exemplary embodiment, as shown in FIG. 1, a method for transport equipment scheduling is provided. This embodiment is described by taking the method being performed by a terminal as an example. It is understood that the method may also be performed by a server, and may also be performed by a system including both a terminal and a server, and be implemented through interaction between a terminal and a server. The terminal may include, but is not limited to, various personal computers, laptops, smartphones, tablets, etc.; and the server may be a standalone server or a server cluster composed of multiple servers. In this embodiment, the method includes the following steps.

Step S101, acquiring an image to be recognized, where the image to be recognized includes an object to be recognized, and the object to be recognized is provided with an identification code.

The image to be recognized may be an image captured by a camera, for example, an image captured by a camera on top of a storage bin, containing the object to be recognized.

The object to be recognized may be an object whose position needs to be recognized, for example, a cage trolley. For instance, in a logistics scenario, the object to be recognized may be a cage trolley used in logistics.

The identification code may be a barcode (such as a one-dimensional code). For example, the identification code may be a one-dimensional code affixed to the top of the cage trolley.

In an embodiment, the terminal acquires image data for the top of the storage bin through a camera or other device, and the image data contains the object to be recognized (such as a cage trolley) whose position needs to be recognized.

Step S102, recognizing the identification code in the image to be recognized to obtain identification code information of the object to be recognized.

The identification code information may be a number corresponding to each identification code obtained through recognition.

In an embodiment, the terminal processes the image data to recognize the identification code provided on the surface of the object to be recognized; parses the recognized identification code to obtain information such as a number, which is determined as the identification code information of the object to be recognized.

Step S103, determining a current position of the object to be recognized based on the identification code information.

The current position may be a profile position of the object to be recognized in the image to be recognized.

In an embodiment, the terminal recognizes the profile position of the object to be recognized in the image to be recognized based on position information of obtained multiple identification codes, and determines the profile position as the current position of the object to be recognized.

Step S104, recognizing the current position and a target position of the object to be recognized to obtain a position recognition result of the object to be recognized, where the position recognition result is used to indicate whether the object to be recognized is located within the target position.

The target position may be the target position area where the object to be recognized needs to be located. For example, the target position may be a storage bin.

The position recognition result is used to indicate whether the cage trolley has reached the target position.

In an embodiment, the terminal reads a preset target position of the object to be recognized from a database; matches the calculated current position with the target position to determine whether the current position coincides with the target position; indicates that the object to be recognized has reached the target position if the current position matches the target position; outputs that the position recognition result of the object to be recognized is the object to be recognized being located within the target position; and outputs that the position recognition result of the object to be recognized is the object to be recognized not being located within the target position if the current position does not match the target position.

Step S105: scheduling a transport equipment based on the position recognition result, where transport equipment is configured for transporting the object to be recognized.

In the above method for transport equipment scheduling, an image to be recognized is acquired, where the image to be recognized includes an object to be recognized, and the object to be recognized is provided with an identification code; the identification code in the image to be recognized is recognized to obtain identification code information of the object to be recognized; a current position of the object to be recognized is determined based on the identification code information; the current position and a target position of the object to be recognized are recognized to obtain a position recognition result of the object to be recognized, where the position recognition result is used to indicate whether the object to be recognized is located within the target position; and a transport equipment is scheduled based on the position recognition result, where the transport equipment is configured for transporting the object to be recognized. In the solution, identification code information is obtained by recognizing the identification code provided on the object to be recognized in the image to be recognized; a current position of the object to be recognized is determined based on the identification code information; the current position and a target position of the object to be recognized are recognized to obtain a position recognition result of the object to be recognized for indicating whether the object to be recognized is located within the target position. In this way, in the solution, whether an object is within a target position is automatically recognized using the identification code and position information, being beneficial to improving the efficiency and accuracy of position recognition and enhancing the scheduling efficiency and accuracy of transport equipment.

In an exemplary embodiment, as shown in FIG. 2, in step S103, determining the current position of the object to be recognized based on the identification code information includes:
step S201, determining coordinate information of the identification code based on the identification code information, and
step S202, determining the current position of the object to be recognized based on the coordinate information of the identification code.

The coordinate information of the identification code may be a pixel coordinate position of each identification code in the image to be recognized, obtained through image recognition.

In an embodiment, the terminal recognizes various identification codes from the image to be recognized; for each recognized identification code, obtains the identification code information belonging to the same cage trolley based on the corresponding identification code information; for each cage trolley, determines the coordinate information of the identification code based on the pixel coordinate position of the corresponding identification code in the image to be recognized; fits a profile shape or a boundary box of the cage trolley in the image to be recognized based on a distribution rule of the coordinate information of the identification codes of the same cage trolley; for example, may analyze a major-axis distribution of the identification code's coordinate points in the image to be recognized and fit a rectangular profile matched with the storage bin; or may directly recognize a profile of the cage trolley through a deep learning network by taking the one-dimensional code coordinate points as input; may calculate the position of the cage trolley in the image to be recognized based on the coordinate information of the identification code regardless of the algorithm used; and determines a position of the calculated profile shape or boundary box of the cage trolley as the current position of the cage trolley to be recognized.

By the solution provided in this embodiment, the current position of the object to be recognized is automatically predicted through the coordinate information of the identification code, which is beneficial for efficiently and accurately determining the current position of the object to be recognized, improving the efficiency and accuracy of position recognition.

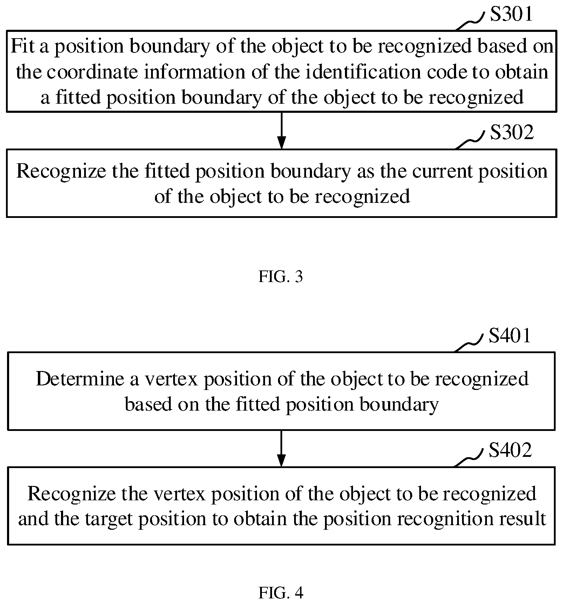

In an exemplary embodiment, as shown in FIG. 3, determining the current position of the object to be recognized based on the coordinate information of the identification code includes:
step S301, fitting a position boundary of the object to be recognized based on the coordinate information of the identification code to obtain a fitted position boundary of the object to be recognized; and
step S302, recognizing the fitted position boundary as the current position of the object to be recognized.

Fitting the position boundary may be a process of fitting the profile or a boundary shape of the object to be recognized in the image to be recognized based on the distribution rule of coordinate points of the identification code, for example, a process of fitting a rectangular profile matched with the storage bin using a major-axis distribution of the one-dimensional code's coordinate points.

The fitted position boundary may be a profile or a boundary shape of the cage trolley in the image to be recognized calculated through the fitting of the position boundary. For example, the fitted position boundary may be a rectangular profile (rectangular box).

In an embodiment, the terminal fits the position boundary of the identification code's coordinates. For example, the terminal may fit a profile matched with the shape of the object to be recognized using the major-axis distribution of the identification code's coordinate points in the image and determine the profile as the fitted position boundary of the object to be recognized and determine the fitted rectangular profile as the current position of the object to be recognized in the image to be recognized.

By the solution provided in this embodiment, the position boundary shape of the object to be recognized is fitted using the identification code's coordinate points and this fitted position boundary is determined as the current position of the object to be recognized, which is beneficial for efficiently and accurately determining the current position of the object to be recognized, improving the efficiency and accuracy of position recognition.

In an exemplary embodiment, as shown in FIG. 4, in step S104, recognizing the current position and the target position of the object to be recognized to obtain the position recognition result of the object to be recognized includes:
step S401, determining a vertex position of the object to be recognized based on the fitted position boundary; and
step S402, recognizing the vertex position of the object to be recognized and the target position to obtain the position recognition result.

The vertex position may be a coordinate position of each vertex in the fitted position boundary (such as a rectangular profile) in the image to be recognized.

In an embodiment, the terminal recognizes a coordinate position of each vertex in the fitted position boundary within the image to be recognized, determines the coordinate position as the vertex position of the object to be recognized, and determines whether the vertex position of the object to be recognized is matched with the target position by matching the vertex position of the object to be recognized with the target position to obtain the position recognition result.

In the solution provided in this embodiment, by firstly determining the vertex position of the object to be recognized and then recognizing the vertex position and the target position, the position recognition result is determined, which performs position recognition using the vertex position with less data but higher accuracy, further improving the efficiency and accuracy of position recognition.

In an exemplary embodiment, recognizing the vertex position of the object to be recognized and the target position to obtain the position recognition result includes: determining that the object to be recognized is located within the target position in a case that all vertex positions of the object to be recognized are located within the target position; or determining that the object to be recognized is not located within the target position in a case that not all vertex positions of the object to be recognized are located within the target position.

In an embodiment, the terminal determines whether all vertex positions of the object to be recognized are within a range of the target position. The terminal determines that the position recognition result of the object to be recognized is the object to be recognized being located within the range of the target position in a case that all vertex positions of the object to be recognized are located within the range of the target position; or determines that the position recognition result of the object to be recognized is the object to be recognized not being located within the range of the target position in a case that not all vertex positions of the object to be recognized are located within the range of the target position.

In the solution provided in this embodiment, the position recognition result is automatically determined based directly on whether the vertex positions are within the range of the target position range, further improving the efficiency of position recognition.

Recognizing the current position and a target position of the object to be recognized to obtain the position recognition result of the object to be recognized includes: extracting a region image corresponding to the object to be recognized from the image to be recognized in a case that there is an overlap between the current position and the target position of the object to be recognized; recognizing a vertex position of the object to be recognized in the region image using a vertex position recognition model to obtain the vertex position of the object to be recognized; and recognizing the vertex position and the target position to obtain the position recognition result of the object to be recognized.

The target position may be an endpoint that the object to be recognized needs to reach. For example, the target position may be a position of a storage bin. The region image may be a sub-image extracted from the image to be recognized corresponding to the object to be recognized.

In an embodiment, the terminal determines whether there is an overlap between the current position of the object to be recognized and the target position (e.g., the storage bin) and extracts, if there is the overlap, an image region corresponding to the object to be recognized from the image to be recognized based on coordinates of the current position to obtain the region image corresponding to the object to be recognized.

The vertex position recognition model may be a deep learning model configured for recognizing point positions of a specific profile or a structural feature of the object to be recognized in the region image. For example, the vertex position recognition model may be configured for recognizing coordinates of four vertexes of a cage trolley. The vertex position may be coordinates of the feature points of the object to be recognized recognized by the vertex position recognition model, such as the coordinates of the four vertexes of the object to be recognized.

In an embodiment, the terminal inputs the region image into a vertex position recognition model and recognizes the vertex position of the object to be recognized in the region image using the vertex position recognition model to obtain the vertex position of the object to be recognized output from the vertex position recognition model, such as the specific coordinates of the four vertexes of the object to be recognized (e.g., a cage trolley).

The position recognition result may be a recognition result for determining whether the object to be recognized is completely located within the target position based on a comparison between the vertex position and the target position.

In an embodiment, the terminal compares the recognized vertex position with the target position (e.g., a storage bin); determines that the object to be recognized is located within the target position if at least three points among the vertex positions are within the range of the target position, or determines that the object to be recognized is not located within the target position otherwise, generates and outputs the position recognition result of the object to be recognized based on whether the object to be recognized is located within the target position.

In the solution provided in this embodiment, a region image corresponding to the object to be recognized is extracted from the image to be recognized in a case that there is an overlap between the current position and the target position of the object to be recognized; a vertex position of the object to be recognized in the region image is recognized using a vertex position recognition model to obtain the vertex position of the object to be recognized; and the vertex position and the target position are recognized to obtain the position recognition result of the object to be recognized, where the position recognition result is used to indicate whether the object to be recognized is located within the target position. In this solution, by recognizing the current position of the object to be recognized from the image to be recognized, a region image corresponding to the object to be recognized is extracted from the image to be recognized in a case that there is an overlap between the current position and the target position of the object to be recognized; a vertex position of the object to be recognized in the region image is recognized using a vertex position recognition model to obtain the vertex position of the object to be recognized; and the vertex position and the target position are recognized to obtain the position recognition result indicating whether the object to be recognized is located within the target position. In this way, the solution determines a position state of the object to be recognized by recognizing the start and precise positions of the object to be recognized and comparing the start and precise positions with the target position, being beneficial to improving the efficiency and accuracy of position recognition.

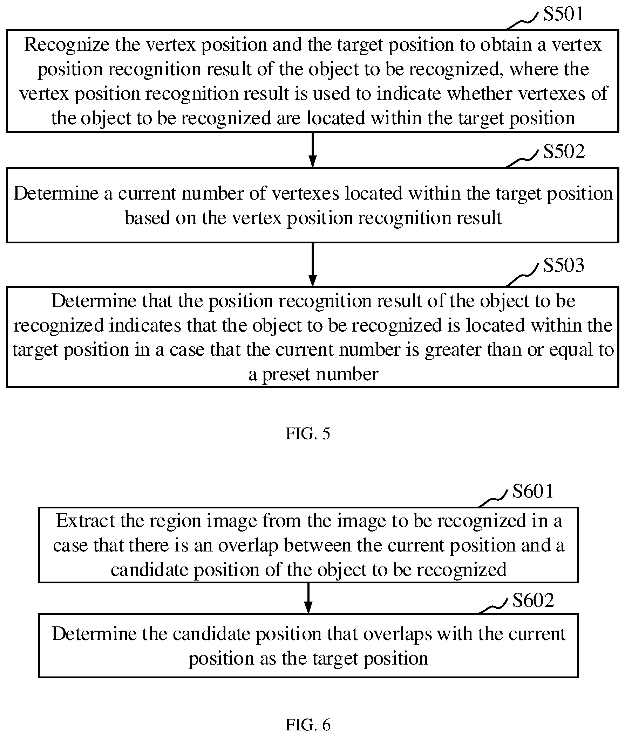

In an exemplary embodiment, as shown in FIG. 5, recognizing the vertex position and the target position to obtain the position recognition result of the object to be recognized includes:
step 501, recognizing the vertex position and the target position to obtain a vertex position recognition result of the object to be recognized, where the vertex position recognition result is used to indicate whether vertexes of the object to be recognized are located within the target position;
step 502, determining a current number of vertexes located within the target position based on the vertex position recognition result; and
step 503, determining that the position recognition result of the object to be recognized indicates that the object to be recognized is located within the target position in a case that the current number is greater than or equal to a preset number.

The vertex position recognition result may be a recognition result for determining whether each vertex of the object to be recognized is within the range of the target position by comparing the vertex position with the target position.

The current number may be a number of vertexes currently determined to be located within the target position, obtained by statistical analysis of the vertex position recognition result.

The preset number may be a given threshold number used to determine whether the object to be recognized has completely entered the target position.

In an embodiment, the terminal compares coordinates of the recognized vertex position with coordinates of the target position to determine whether each vertex is within the range of the target position; obtains the vertex position recognition result for each vertex of the object to be recognized based on comparison results between the vertex position and the target position for indicating whether the vertex is within the target position; counts the number of vertexes currently determined to be within the target position based on all obtained vertex position recognition results; compares the current number with a preset number, where the preset number may be a predefined minimum number of vertexes required to determine that the object to be recognized has fully entered the target position; and determines that the position recognition result of the object to be recognized indicates that the object to be recognized is within the target position in a case that the current number is greater than or equal to the preset number, indicating that a sufficient number of vertexes of the object to be recognized have entered the target position, meaning that the object to be recognized is within the target position.

In the solution provided in this embodiment, whether the entire object to be recognized has entered the target position is further determined by counting the number of vertexes entering the target position, improving the accuracy rate of position recognition.

In an exemplary embodiment, as shown in FIG. 6, extracting the region image corresponding to the object to be recognized from the image to be recognized in the case that there is the overlap between the current position and the target position of the object to be recognized includes:
step 601, extracting the region image from the image to be recognized in a case that there is an overlap between the current position and a candidate position of the object to be recognized; and
step 602, determining the candidate position that overlaps with the current position as the target position.

The candidate position may be a candidate position that the object to be recognized may reach. For example, the candidate position may be a range of position coordinates of different storage bins.

In an embodiment, the terminal determines whether there is an overlap between the current position and the candidate position of the object to be recognized; extracts a region image from the image to be recognized in a case that there is an overlap; and determines the candidate position that overlaps with the current position as the target position of the object to be recognized.

By the solution provided in this embodiment, a region image is automatically extracted from the image to be recognized based on the overlap relationship between the current position and the candidate position, and the target position of the object to be recognized is recognized, which is beneficial for accurately determining the region image and the target position, improving the accuracy of position recognition.

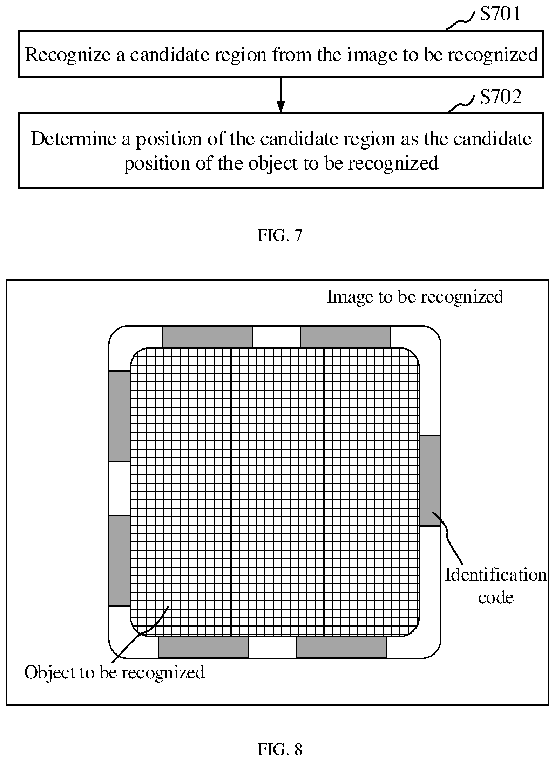

In an exemplary embodiment, as shown in FIG. 7, the method further includes:
step 701, recognizing a candidate region from the image to be recognized; and
step 702, determining a position of the candidate region as the candidate position of the object to be recognized.

The candidate region may be a candidate region that the object to be recognized contained in the image to be recognized reaches. For example, the candidate region may be a region of each storage bin.

The position of the candidate region may be a coordinate point of the candidate region or a coordinate range of the candidate region.

In an embodiment, the terminal recognizes a candidate region containing the object to be recognized from the image to be recognized; locates each recognized candidate region in an image coordinate system to determine position coordinates of each candidate region; and determines the position coordinates of each candidate region as a set of candidate positions of the object to be recognized. The process of recognizing the candidate region from the original image and determining the position of the candidate region as the candidate position is completed.

By the solution provided in this embodiment, the candidate region in the image to be recognized is automatically recognized and the position of the candidate region is determined as the candidate position of the object to be recognized, which is beneficial for accurately determining, improving the accuracy of position recognition.

In an exemplary embodiment, scheduling the transport equipment based on the position recognition result includes: acquiring a first historical position recognition result corresponding to a first recognized image, where the first recognized image is an image captured within a first preset time period before the image to be recognized is captured; acquiring a second historical position recognition result corresponding to a second recognized image in a case that the first historical position recognition result is consistent with the position recognition result, where the second recognized image is an image captured within a second preset time period before the image to be recognized is captured; determining an object state recognition result corresponding to the target position based on the position recognition result, the first historical position recognition result, and the second historical position recognition result, where the object state recognition result is used to indicate whether the object to be recognized is present within the target position; generating a transport instruction corresponding to the object to be recognized in a case that the object state recognition result indicates that the object to be recognized is present within the target position; and sending the transport instruction to the transport equipment, where the transport equipment is configured for transporting the object to be recognized from the target position to a transport position of the object to be recognized.

In an embodiment, the first recognized image may be a series of historical images, such as three consecutive frames of images, captured within a first preset time period before the image to be recognized is captured. The first historical position recognition result may be a position recognition result of the first recognized image used to indicate whether the object to be recognized is located within the target position. The second recognized image may be a series of images captured within a second preset time period before the image to be recognized is captured. For example, the second preset time period includes the first preset time period, and the second recognized image includes the first recognized image. For instance, the second recognized image may be ten consecutive frames of images. The second historical position recognition result may be a position recognition result of the second recognized image used to indicate whether the object to be recognized is located within the target position. The object state recognition result may be a result of determining whether the object to be recognized is within the target position based on the position recognition results at multiple time points.

In an embodiment, the terminal acquires a first historical position recognition result corresponding to a first recognized image from a historical data; determines whether the first historical position recognition result is consistent with the position recognition result (e.g., whether both indicate that the object to be recognized is located within the target position); acquires a second historical position recognition result corresponding to a second recognized image from historical data in a case that the first historical position recognition result is consistent with the position recognition result; determines whether the position recognition result, the first historical position recognition result, and the second historical position recognition result are consistent (e.g., whether they all indicate that the object to be recognized is located within the target position) to obtain a comparison result indicating whether they are consistent; determines the object state recognition result corresponding to the target position based on this comparison result, for example, and determines the object state recognition result indicating that an object to be recognized is present within the target position, which may determine that the object to be recognized is successfully located within the target position in a case that the comparison result shows that all the position recognition result, the first historical position recognition result, and the second historical position recognition result indicate that the object to be recognized is located within the target position. The transport instruction may be an instruction configured for controlling the transport equipment to transport the object to be recognized.

The transport equipment may be an equipment responsible for transporting the object to be recognized, such as an AGV.

The transport position may be a position of a destination to which the object to be recognized is transported.

In an embodiment, the terminal determines whether an object to be recognized is present within the target position based on the current position recognition result and the historical position recognition result to obtain an object state recognition result; generates a corresponding transport instruction for the object to be recognized in a case that object state recognition result indicates that an object to be recognized is present within the target position, where the instruction may include information such as the position coordinates of the object to be recognized and the transportation destination (transport position); and sends the transport instruction to the transport equipment (such as an AGV) to allow the transportation device, after receiving the instruction, to autonomously navigate to the target position based on the content of the instruction and transport the object to be recognized from the target position to the transportation destination.

In the solution provided in this embodiment, by comparing the historical position recognition results of images from multiple time points with the current position recognition result, whether an object to be recognized is present within the target position may be more reliably determined, accurately determining whether an object to be recognized is present within the target position. By controlling the transportation of the object to be recognized after image recognition and determination, an automated process of transporting the object to be recognized from one position to another is achieved, improving transportation efficiency.

The method for transport equipment scheduling provided in the present application is described below by taking an embodiment. This embodiment uses an application of the method to a terminal as an example, including the following steps.

Step 1, the terminal acquires an image to be recognized, where the image to be recognized includes an object to be recognized, and the object to be recognized is provided with an identification code; recognizes the identification code in the image to be recognized to obtain identification code information of the object to be recognized; determines a current position of the object to be recognized based on the identification code information.

Step 2, the terminal recognizes a candidate region from the image to be recognized and determines a position of the candidate region as a candidate position of the object to be recognized.

Step 3, the terminal extracts a region image from the image to be recognized in a case that there is an overlap between the current position and the candidate position of the object to be recognized; and determines the candidate position that overlaps with the current position as the target position.

Step 4, the terminal recognizes a vertex position of the object to be recognized in the region image using a vertex position recognition model to obtain the vertex position of the object to be recognized.

Step 5, the terminal recognizes the vertex position and the target position to obtain a vertex position recognition result of the object to be recognized, where the vertex position recognition result is used to indicate whether vertexes of the object to be recognized are located within the target position; determines a current number of vertexes located within the target position based on the vertex position recognition result; and determines that the position recognition result of the object to be recognized indicates that the object to be recognized is located within the target position in a case that the current number is greater than or equal to a preset number.

Step 6, the terminal acquires a first historical position recognition result corresponding to a first recognized image, where the first recognized image is an image captured within a first preset time period before the image to be recognized is captured; acquires a second historical position recognition result corresponding to a second recognized image in a case that the first historical position recognition result is consistent with the position recognition result, where the second recognized image is an image captured within a second preset time period before the image to be recognized is captured; determines an object state recognition result corresponding to the target position based on the position recognition result, the first historical position recognition result, and the second historical position recognition result, where the object state recognition result is used to indicate whether the object to be recognized is present within the target position.

Step 7, the terminal generates a transport instruction corresponding to the object to be recognized in a case that the object state recognition result indicates that the object to be recognized is present within the target position; and sends the transport instruction to the transport equipment, where the transport equipment is configured for transporting the object to be recognized from the target position to a transport position of the object to be recognized.

In the solution provided by the embodiment, by recognizing the current position of the object to be recognized from the image to be recognized, a region image corresponding to the object to be recognized is extracted from the image to be recognized in a case that there is an overlap between the current position and the target position of the object to be recognized; a vertex position of the object to be recognized in the region image is recognized using a vertex position recognition model to obtain the vertex position of the object to be recognized; and the vertex position and the target position are recognized to obtain the position recognition result indicating whether the object to be recognized is located within the target position. In this way, the solution determines a position state of the object to be recognized by recognizing the start and precise positions of the object to be recognized and comparing the start and precise positions with the target position, being beneficial to improving the efficiency and accuracy of position recognition.

In an exemplary embodiment, scheduling the transport equipment based on the position recognition result includes: acquiring historical position recognition results corresponding to recognized images in a case that the position recognition result indicates that the object to be recognized is located within the target position, where the recognized images are images of the object to be recognized captured within preset time periods before the image to be recognized is captured; determining that the object to be recognized is successfully located within the target position in a case that all the historical position recognition results corresponding to the recognized images indicate that the object to be recognized is located within the target position; determining an identity of the object to be recognized based on the identification code information of the object to be recognized; determining a transport position of the object to be recognized based on the identity of the object to be recognized; and sending the transport position to the transport equipment, where the transport equipment is configured for transporting the object to be recognized to the transport position.

The recognized images may be images captured within a preset time period before the image to be recognized is captured.

The preset time period may be a pre-determined time period.

The historical position recognition results may be results obtained by performing position recognition on the recognized images, which are used to indicate whether the object to be recognized is located within the target position.

In an embodiment, the terminal determines whether the position recognition results indicate that the object to be recognized is located within the target position; acquires recognized images captured within a preset time period before the image to be recognized is captured in a case that the position recognition results indicate that the object to be recognized is located within the target position; performs position recognition on the recognized images to obtain corresponding historical position recognition results; determines whether all historical position recognition results indicate that the object to be recognized is located within the target position; in a case that all the historical position recognition results indicate that the object to be recognized is located within the target position, determines that the object to be recognized is successfully located within the target position, for example, this means that the object to be recognized has successfully remained within the range of the target position. The identity of the object to be recognized may be a unique marker of the object to be recognized, such as the ID (identification number) of the cage trolley.

The transport position may be a target position to which the object to be recognized needs to be transported.

The transport equipment may be an apparatus configured for transporting the object to be recognized, such as an AGV.

In an embodiment, the terminal determines the unique identity of the object to be recognized based on the identification code information on the object to be recognized; queries the recognized identity in the system based on the recognized identity of the object to be recognized and determines a next transport position corresponding to the object to be recognized; sends the determined transport position to the transport equipment, enabling the transport equipment to autonomously navigate to the position of the object to be recognized, grab and load the object to be recognized, drive and transport the object to be recognized to the transport position, and unload the object to be recognized at the transport position.

In the solution provided in this embodiment, by combining the results of a single position recognition indicating that the object to be recognized is located within the target position with historical position recognition results over a time period, the object to be recognized is determined to be successfully located or stationed at the target position in a case that the historical position recognition results also indicate the object to be recognized is located within the target position, improving the accuracy of position recognition. The identity of the object to be recognized is determined through the identification code information and its corresponding next transport task is queried, an automatic position recognition and transportation process is completed, improving transportation efficiency.

The method for transport equipment scheduling provided in the present application is described below by taking an embodiment. This embodiment uses an application of the method to a terminal as an example, including the following steps.

Step 1, the terminal acquires an image to be recognized, where the image to be recognized includes an object to be recognized, and the object to be recognized is provided with an identification code.

Step 2, the terminal recognizes the identification code in the image to be recognized to obtain identification code information of the object to be recognized.

Step 3, the terminal determines coordinate information of the identification code based on the identification code information; fits a position boundary of the object to be recognized based on the coordinate information of the identification code to obtain a fitted position boundary of the object to be recognized; and recognizes the fitted position boundary as the current position of the object to be recognized.

Step 4, the terminal determines vertex positions of the object to be recognized based on the fitted position boundary; determines that the object to be recognized is located within the target position in a case that all vertex positions of the object to be recognized are located within the target position; or determines that the object to be recognized is not located within the target position in a case that not all vertex positions of the object to be recognized are located within the target position.

Step 5, the terminal acquires historical position recognition results corresponding to recognized images in a case that the position recognition result indicates that the object to be recognized is located within the target position, where the recognized images are images of the object to be recognized captured within preset time periods before the image to be recognized is captured; and determines that the object to be recognized is successfully located within the target position in a case that all the historical position recognition results corresponding to the recognized images indicate that the object to be recognized is located within the target position.

Step 6, the terminal determines an identity of the object to be recognized based on the identification code information of the object to be recognized; determines a transport position of the object to be recognized based on the identity of the object to be recognized; and sends the transport position to the transport equipment, where the transport equipment is configured for transporting the object to be recognized to the transport position.

The position recognition results are used to indicate whether the object to be recognized is located within the target position.

In the solution provided by the embodiment, identification code information is obtained by recognizing the identification code provided on the object to be recognized in the image to be recognized; a current position of the object to be recognized is determined based on the identification code information; the current position and a target position of the object to be recognized are recognized to obtain a position recognition result of the object to be recognized for indicating whether the object to be recognized is located within the target position. In this way, in the solution, whether an object is within a target position is automatically recognized using the identification code and position information, being beneficial to improving the efficiency and accuracy of position recognition.

The method for transport equipment scheduling provided in the present application is described below by taking an applied embodiment. This embodiment uses an application of the method to a terminal as an example, including the following steps.

Step 1, the terminal acquires the ID of a cage trolley through a scanner.

An industrial code scanner or a fisheye industrial camera may be installed on the top of the storage bin (the specific mounting height depends on the available height, as the site may have a steel platform, resulting in a relatively low floor, possibly within 2.5m, in which case a fisheye industrial camera is suitable to capture the entire top of the cage trolley), and a laser scanner may be installed as the triggering device for the code scanner or fisheye industrial camera. When the laser scanner on the top detects an approaching cage trolley, the code scanner is triggered to acquire the ID of a cage trolley (the ID information may include the specific coordinates of the one-dimensional code).

Step 2, when the cage trolley is pushed into the storage bin, the terminal sends a trigger signal based on the detected information through the laser scanner, initiating the code scanner to work. The code scanner acquires an image (the image to be recognized) based on the acquired signal, decodes a one-dimensional code in the image, and outputs the coordinates and actual content of the one-dimensional code.

Step 3, the terminal acquires the captured image, coordinates of the one-dimensional code, and specific recognition results through the code scanner.

Step 4, the terminal obtains the results and coordinates of the one-dimensional code, and analyzes the coordinates to determine an initial posture of the cage trolley. This may be determined using multiple one-dimensional codes (referring to FIG. 8; a ring of one-dimensional codes may be pre-attached to the top of the cage trolley, forming a rectangle, which may hold up to seven one-dimensional codes). When the rectangle approximately formed by the major axes of the multiple one-dimensional codes roughly resembles the area marked on the storage bin, it may be determined that the cage trolley is essentially in place.

Referring to FIG. 8, the image to be recognized in FIG. 8 contains the object to be recognized (a cage trolley), with seven identification codes affixed around its top.

Step 5, the terminal inputs the image into a cage trolley vertex recognition network (such as RTMPose, a real-time keypoint detection model) to determine top vertexes of the cage trolley, and then determines whether the vertexes are within the designated storage bin area; determines that the cage trolley has not moved through multiple images, which determines that the cage trolley is in place.

Step 6, after determining that the cage trolley is in place, the terminal retrieves the corresponding transport task from the system based on the recognized ID of the cage trolley, and automatically calls the nearest AGV to transport the cage trolley to the appropriate destination.

For example, the code scanner acquires an image based on the acquired signal and decodes the one-dimensional code in the image to obtain information of the one-dimensional code. The code scanner then sends the information of the one-dimensional code to the terminal and the terminal receives the information of the one-dimensional code from the scanner. For the same cage trolley, since the information of the one-dimensional code is identical (having the same ID), the terminal may determine whether the information of the one-dimensional code belongs to the same cage trolley or multiple cage trolleys. After recognizing the information of the one-dimensional code, the terminal may recognize coordinates of the one-dimensional code for the same cage trolley. The terminal may determine the actual posture of the cage trolley based on the coordinates of the one-dimensional code for the same cage trolley, for example, may fit a rectangular box of the cage trolley using the coordinates of the one-dimensional code; determine whether the cage trolley is located in a region of the storage bin based on the vertex coordinates of the cage trolley's rectangular box; recognize that a time when the cage trolley is in the storage bin through multiple frames of images, and indicate that the cage trolley has successfully entered the storage bin if the time exceeds a preset time threshold; and subsequently transport the cage trolley to the target position based on the ID of the recognized cage trolley through a system calling the AGV.

In the solution provided in the embodiment, whether an object is located within a target position is automatically recognized using identification codes and position information, improving the efficiency and accuracy of position recognition.

It should be understood that although the steps in the flowcharts of the embodiments described above are shown sequentially according to the arrows, these steps are not necessarily performed in the order indicated by the arrows. Unless explicitly stated herein, there is no strict restriction on an order in which these steps are performed, and these steps may be performed in other orders. Furthermore, at least part of the steps in the flowcharts of the embodiments described above may include multiple steps or stages. These steps or stages are not necessarily completed at the same time, but may be performed at different times. The order in which these steps are performed is not necessarily sequential, but may be performed alternately or in turn with other steps or at least a portion of steps or stages in other steps.

Based on the same inventive concept, the present application further provides an apparatus for transport equipment scheduling for implementing the method for transport equipment scheduling described above. The solution for solving the problems provided by the apparatus is similar to the implementation solution described in the above method. Therefore, the specific limitations in one or more embodiments of the apparatus for transport equipment scheduling provided below may be found in the limitations of the method for transport equipment scheduling above, and are not repeated here.

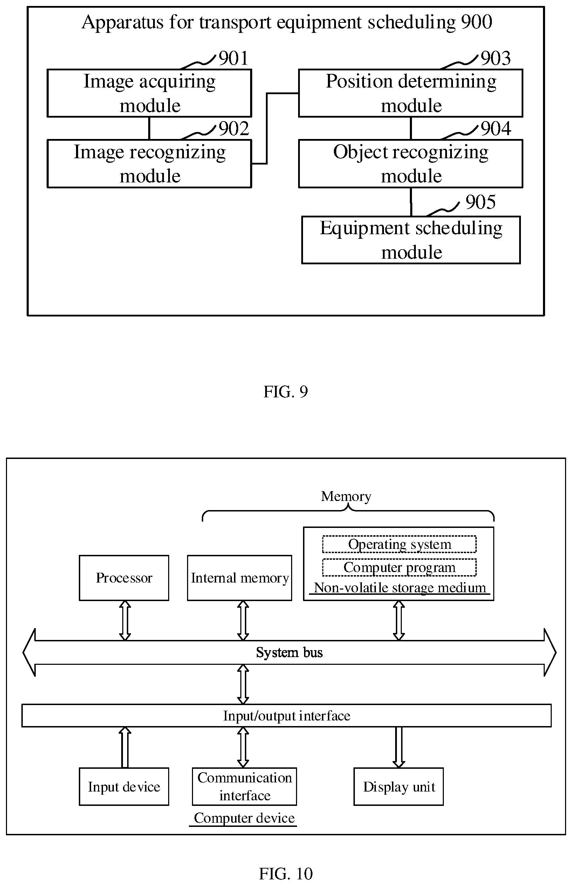

In an exemplary embodiment, as shown in FIG. 9, an apparatus 900 for transport equipment scheduling is provided, including:
an image acquiring module 901, configured for acquiring an image to be recognized, where the image to be recognized includes an object to be recognized, and the object to be recognized is provided with an identification code;
an image recognizing module 902, configured for recognizing the identification code in the image to be recognized to obtain identification code information of the object to be recognized;
a position determining module 903, configured for determining a current position of the object to be recognized based on the identification code information;
an object recognizing module 904, configured for recognizing current position and a target position of the object to be recognized to obtain a position recognition result of the object to be recognized, where the position recognition result is used to indicate whether the object to be recognized is located within the target position; and
an equipment scheduling module 905, configured for scheduling a transport equipment based on the position recognition result, where the transport equipment is configured for transporting the object to be recognized.

In an exemplary embodiment, the position determining module 903 is further configured for determining coordinate information of the identification code based on the identification code information; and determining the current position of the object to be recognized based on the coordinate information of the identification code.

In an exemplary embodiment, the position determining module 903 is further configured for fitting a position boundary of the object to be recognized based on the coordinate information of the identification code to obtain a fitted position boundary of the object to be recognized; and recognizing the fitted position boundary as the current position of the object to be recognized.

In an exemplary embodiment, the object recognizing module 904 is further configured for determining a vertex position of the object to be recognized based on the fitted position boundary; and recognizing the vertex position of the object to be recognized and the target position to obtain the position recognition result.

In an exemplary embodiment, the object recognizing module 904 is further configured for determining that the object to be recognized is located within the target position in a case that all vertex positions of the object to be recognized are located within the target position; or determining that the object to be recognized is not located within the target position in a case that not all vertex positions of the object to be recognized are located within the target position.

In an exemplary embodiment, the object recognizing module 904 is further configured for extracting a region image corresponding to the object to be recognized from the image to be recognized in a case that there is an overlap between the current position and the target position of the object to be recognized; recognizing a vertex position of the object to be recognized in the region image using a vertex position recognition model to obtain the vertex position of the object to be recognized; and recognizing the vertex position and the target position to obtain the position recognition result of the object to be recognized.

In an exemplary embodiment, the object recognizing module 904 is further configured for recognizing the vertex position and the target position to obtain a vertex position recognition result of the object to be recognized, where the vertex position recognition result is used to indicate whether vertexes of the object to be recognized are located within the target position; determining a current number of vertexes located within the target position based on the vertex position recognition result; and determining that the position recognition result of the object to be recognized indicates that the object to be recognized is located within the target position in a case that the current number is greater than or equal to a preset number.

In an exemplary embodiment, the object recognizing module 904 is further configured for extracting a region image from the image to be recognized in a case that there is an overlap between the current position and the candidate position of the object to be recognized; and determining the candidate position that overlaps with the current position as the target position.

In an exemplary embodiment, the object recognizing module 904 is further configured for recognizing a candidate region from the image to be recognized and determining a position of the candidate region as a candidate position of the object to be recognized.

In an exemplary embodiment, the equipment scheduling module 905 is further configured for acquiring a first historical position recognition result corresponding to a first recognized image, where the first recognized image is an image captured within a first preset time period before the image to be recognized is captured; acquiring a second historical position recognition result corresponding to a second recognized image in a case that the first historical position recognition result is consistent with the position recognition result, where the second recognized image is an image captured within a second preset time period before the image to be recognized is captured; determining an object state recognition result corresponding to the target position based on the position recognition result, the first historical position recognition result, and the second historical position recognition result, where the object state recognition result is used to indicate whether the object to be recognized is present within the target position; generating a transport instruction corresponding to the object to be recognized in a case that the object state recognition result indicates that the object to be recognized is present within the target position; and sending the transport instruction to the transport equipment, where the transport equipment is configured for transporting the object to be recognized from the target position to a transport position of the object to be recognized.

In an exemplary embodiment, the equipment scheduling module 905 is further configured for acquiring historical position recognition results corresponding to recognized images in a case that the position recognition result indicates that the object to be recognized is located within the target position, where the recognized images are images of the object to be recognized captured within preset time periods before the image to be recognized is captured; determining that the object to be recognized is successfully located within the target position in a case that all the historical position recognition results corresponding to the recognized images indicate that the object to be recognized is located within the target position; determining an identity of the object to be recognized based on the identification code information of the object to be recognized; determining a transport position of the object to be recognized based on the identity of the object to be recognized; and sending the transport position to the transport equipment, where the transport equipment is configured for transporting the object to be recognized to the transport position.

Each module in the above-described apparatus for transport equipment scheduling may be implemented entirely or partially through software, hardware, or a combination thereof. Each module may be embedded in or independent of one or more processors in a computer device in hardware form, or stored in the memory of the computer device in software form, and the processor may call and perform the operations corresponding to each module.

In an exemplary embodiment, a computer device is provided, which may be a terminal, and its internal structure diagram may be as shown in FIG. 10. The computer device includes one or more processors, a memory, an input/output interface, a communication interface, a display unit, and an input device. The processor, the memory, and the input/output interface are connected via a system bus, and the communication interface, the display unit, and the input device are also connected to the system bus via the input/output interface. The processor of the computer device is configured for providing computational and control capabilities. The memory includes a non-volatile storage medium and an internal memory. The non-volatile storage medium stores an operating system and a computer-readable instruction. The internal memory provides an environment for the operation of the operating system and computer-readable instruction stored in the non-volatile storage medium. The input/output interface of the computer device is configured for exchanging information between the processor and an external device. The communication interface of the computer device is configured for performing wired or wireless communication with an external terminal; wireless communication may be achieved through Wi-Fi, mobile cellular networks, near field communication (NFC), or other technologies. The method for transport equipment scheduling is implemented when the computer-readable instruction is executed by the processor. The display unit of the computer device is configured for forming a visually visible image and may be a display screen, a projection device, or a virtual reality imaging device. The display screen may be an LCD screen or an e-ink screen. The input device of the computer device may be a touch layer covering the display screen, or buttons, a trackball, or a touchpad mounted on a casing of the computer device, or an external keyboard, touchpad, or mouse, etc.

It may be understood for those skilled in the art that the structure shown in FIG. 10 is merely a block diagram of a portion of the structure related to the present application and does not constitute a limitation on the computer device to which the present application is applied. A specific computer device may include more or fewer components than shown in the figure, or combine certain components, or have different component arrangements.

In an exemplary embodiment, a computer device is further provided, including a memory and one or more processors. The memory stores a computer-readable instruction that is executed by the one or more processors to perform the steps in the above-described method embodiments.

In an exemplary embodiment, one or more computer-readable storage media are provided, on which a computer-readable instruction is stored. The computer-readable instruction is executed by the one or more processors to perform the steps in the above-described method embodiments.

In an exemplary embodiment, a computer program product is provided, including a computer-readable instruction. The computer-readable instruction is executed by one or more processors to perform the steps in the above-described method embodiments.

It may be understood for those skilled in the art that all or part flows in implementing the method embodiments above may be completed by instructing related hardware using a computer-readable instruction. The computer-readable instruction may be stored in a non-volatile computer-readable storage medium, and may perform the flows of the above method embodiments when executed. Any references to the memory, the database, or other media used in the embodiments provided in the present application may include at least one of non-volatile and volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM) or an external cache memory, etc. By way of illustration and not limitation, RAM may take many forms, such as a static random access memory (SRAM) or a dynamic random access memory (DRAM), etc. The database involved in various embodiments provided in the present application may include at least one of relational databases and non-relational databases. The non-relational databases may include, but are not limited to, blockchain-based distributed databases, etc. The processor involved in the various embodiments provided in the present application may be a general-purpose processor, a central processor, a graphics processor, a digital signal processor, a programmable logic device, a quantum computing-based data processing logic device, etc., and are not limited thereto.

The features of the above embodiments may be combined arbitrarily. For the sake of brevity, not all possible combinations of the features in the above embodiments are described. However, as long as the combination of these features does not contradict each other, it should be considered within the scope of this specification.

The above embodiments only illustrate several implementation methods of the present application, and their descriptions are relatively specific and detailed, but they should not be construed as limiting the scope of the present application. It should be noted that for those skilled in the art, several modifications and improvements may be made without departing from the concept of the present application, and these all fall within the protection scope of the present application. Therefore, the protection scope of the present application shall be determined by the appended claims.

## Claims

1. A method for transport equipment scheduling, performed by a terminal, comprising:
acquiring an image to be recognized, wherein the image to be recognized comprises an object to be recognized, and the object to be recognized is provided with an identification code;
recognizing the identification code in the image to be recognized to obtain identification code information of the object to be recognized;
determining a current position of the object to be recognized based on the identification code information;
recognizing the current position and a target position of the object to be recognized to obtain a position recognition result of the object to be recognized, wherein the position recognition result is used to indicate whether the object to be recognized is located within the target position; and
scheduling a transport equipment based on the position recognition result, wherein the transport equipment is configured for transporting the object to be recognized.

2. The method of claim 1, wherein determining the current position of the object to be recognized based on the identification code information comprises:
determining coordinate information of the identification code based on the identification code information; and
determining the current position of the object to be recognized based on the coordinate information of the identification code.

3. The method of claim 2, wherein determining the current position of the object to be recognized based on the coordinate information of the identification code comprises:
fitting a position boundary of the object to be recognized based on the coordinate information of the identification code to obtain a fitted position boundary of the object to be recognized; and
recognizing the fitted position boundary as the current position of the object to be recognized.

4. The method of claim 3, wherein recognizing the current position and the target position of the object to be recognized to obtain the position recognition result of the object to be recognized comprises:
determining a vertex position of the object to be recognized based on the fitted position boundary; and
recognizing the vertex position of the object to be recognized and the target position to obtain the position recognition result.

5. The method of claim 4, wherein recognizing the vertex position of the object to be recognized and the target position to obtain the position recognition result comprises:
determining that the object to be recognized is located within the target position in a case that all vertex positions of the object to be recognized are located within the target position; or
determining that the object to be recognized is not located within the target position in a case that not all vertex positions of the object to be recognized are located within the target position.

6. The method of claim 1, wherein recognizing the current position and the target position of the object to be recognized to obtain the position recognition result of the object to be recognized comprises:
extracting a region image corresponding to the object to be recognized from the image to be recognized in a case that there is an overlap between the current position and the target position of the object to be recognized;
recognizing a vertex position of the object to be recognized in the region image using a vertex position recognition model to obtain the vertex position of the object to be recognized; and
recognizing the vertex position and the target position to obtain the position recognition result of the object to be recognized.

7. The method of claim 6, wherein recognizing the vertex position and the target position to obtain the position recognition result of the object to be recognized comprises:
recognizing the vertex position and the target position to obtain a vertex position recognition result of the object to be recognized, wherein the vertex position recognition result is used to indicate whether vertexes of the object to be recognized are located within the target position;
determining a current number of vertexes located within the target position based on the vertex position recognition result; and
determining that the position recognition result of the object to be recognized indicates that the object to be recognized is located within the target position in a case that the current number is greater than or equal to a preset number.

8. The method of claim 6, wherein extracting the region image corresponding to the object to be recognized from the image to be recognized in the case that there is the overlap between the current position and the target position of the object to be recognized comprises:
extracting the region image from the image to be recognized in a case that there is an overlap between the current position and a candidate position of the object to be recognized; and
determining the candidate position that overlaps with the current position as the target position.

9. The method of claim 8, further comprising:
recognizing a candidate region from the image to be recognized; and
determining a position of the candidate region as the candidate position of the object to be recognized.

10. The method of claim 6, wherein scheduling the transport equipment based on the position recognition result comprises:
acquiring a first historical position recognition result corresponding to a first recognized image, wherein the first recognized image is an image captured within a first preset time period before the image to be recognized is captured;
acquiring a second historical position recognition result corresponding to a second recognized image in a case that the first historical position recognition result is consistent with the position recognition result, wherein the second recognized image is an image captured within a second preset time period before the image to be recognized is captured;
determining an object state recognition result corresponding to the target position based on the position recognition result, the first historical position recognition result, and the second historical position recognition result, wherein the object state recognition result is used to indicate whether the object to be recognized is present within the target position;
generating a transport instruction corresponding to the object to be recognized in a case that the object state recognition result indicates that the object to be recognized is present within the target position; and
sending the transport instruction to the transport equipment, wherein the transport equipment is configured for transporting the object to be recognized from the target position to a transport position of the object to be recognized.

11. The method of claim 1, wherein scheduling the transport equipment based on the position recognition result comprises:
acquiring historical position recognition results corresponding to a recognized image in a case that the position recognition result indicates that the object to be recognized is located within the target position, wherein the recognized image is an image of the object to be recognized captured within a preset time period before the image to be recognized is captured;
determining that the object to be recognized is successfully located within the target position in a case that all the historical position recognition results corresponding to the recognized image indicate that the object to be recognized is located within the target position;
determining an identity of the object to be recognized based on the identification code information of the object to be recognized;
determining a transport position of the object to be recognized based on the identity of the object to be recognized; and
sending the transport position to the transport equipment, wherein the transport equipment is configured for transporting the object to be recognized to the transport position.

12. An apparatus for transport equipment scheduling, comprising:
an image acquiring module, configured for acquiring an image to be recognized, wherein the image to be recognized comprises an object to be recognized, and the object to be recognized is provided with an identification code;
an image recognizing module, configured for recognizing the identification code in the image to be recognized to obtain identification code information of the object to be recognized;
a position determining module, configured for determining a current position of the object to be recognized based on the identification code information;
an object recognizing module, configured for recognizing the current position and a target position of the object to be recognized to obtain a position recognition result of the object to be recognized, wherein the position recognition result is used to indicate whether the object to be recognized is located within the target position; and
an equipment scheduling module, configured for scheduling a transport equipment based on the position recognition result, wherein the transport equipment is configured for transporting the object to be recognized.

13. A computer device, comprising a memory and one or more processors, the memory being configured for storing a computer-readable instruction, wherein the one or more processors, when executing the computer-readable instruction, are configured for performing the method of any of claims 1 to 11.

14. One or more computer-readable storage media, storing a computer-readable instruction, wherein the computer-readable instruction, when executed by one or more processors, causes the one or more processors to perform the method of any of claims 1 to 11.

15. A computer program product, comprising a computer-readable instruction, wherein the computer-readable instruction, when executed by one or more processors, causes the one or more processors to perform the method of any of claims 1 to 11.
